# EUROPEAN PATENT APPLICATION

(11) **EP 4 838 777 A1**
(43) Date of publication of application: **11.11.2026**
(21) Application number: 26177511.8
(22) Date of filing: 08.05.2026
(51) Int. Cl.: H02P 21/22, B25F 5/00, H02P 6/28

(54) **POWER TOOL INCLUDING OPTIMIZED FIELD WEAKENING**

(30) Priority: 09.05.2025 US 202563803291 P
(71) Applicant: Milwaukee Electric Tool Corporation, Brookfield, WI 53005-2550 (US)
(72) Inventor: Bothe, Erik P., Brookfield, WI 53005 (US); Wood, Jacob G., Brookfield, WI 53005 (US)
(74) Representative: Grünecker Patent- und Rechtsanwälte PartG mbB

(57) **Abstract**

A power tool including a motor, a switching network configured to drive the motor, the switching network including a plurality of switches. The power tool also includes a gate driver configured to provide drive signals to the plurality of switches in the switching network to drive the motor, and an electronic controller configured to determine an optimized field weakening direct-axis current for the motor, determine a maximum torque per ampere ("MTPA") direct-axis current for the motor, compare the optimized field weakening direct-axis current to the MTPA direct-axis current, control, in response to the optimized field weakening direct-axis current being less than the MTPA direct-axis current, the motor using the optimized field weakening direct-axis current, and control, in response to the MTPA direct-axis current being less than the optimized field weakening direct-axis current, the motor using the MTPA direct-axis current.

## Description

### RELATED APPLICATIONS

This application claims the benefit of U.S. Provisional Patent Application No. 63/803,291, filed May 9, 2025, the entire content of which is hereby incorporated by reference.

### FIELD

The present disclosure relates to power tools and, more particularly, power tools utilizing field-oriented control.

### SUMMARY

Power tools described herein include a motor, a switching network configured to drive the motor, the switching network including a plurality of switches, a gate driver configured to provide drive signals to the plurality of switches in the switching network to drive the motor, and an electronic controller. The electronic controller is configured to determine an optimized field weakening direct-axis current for the motor, determine a maximum torque per ampere ("MTPA") direct-axis current for the motor, compare the optimized field weakening direct-axis current to the MTPA direct-axis current, control, in response to the optimized field weakening direct-axis current being less than the MTPA direct-axis current, the motor using the optimized field weakening direct-axis current, and control, in response to the MTPA direct-axis current being less than the optimized field weakening direct-axis current, the motor using the MTPA direct-axis current.

In some aspects, to determine the optimized field weakening direct-axis current, the electronic controller is configured to: determine a rotational speed of the motor, compare a target modulation index to a measured modulation index to determine a modulation index error, scale the modulation index error based on the rotational speed of the motor to produce a scaled modulation index error, and determine the optimized field weakening direct-axis current based on the scaled modulation index error.

In some aspects, the electronic controller is further configured to limit the optimized field weakening direct-axis current to a threshold value.

In some aspects, the electronic controller is further configured to select a most negative direct-axis current value when comparing the optimized field weakening direct-axis current to the MTPA direct-axis current.

In some aspects, the power tool further includes a current sensor configured to measure electrical current supplied to a stator winding of the motor, and wherein the electronic controller is further configured to transform the measured electrical current into d-axis and q-axis components in a rotating reference frame.

In some aspects, the electronic controller is further configured to: convert the optimized field weakening direct-axis current into orthogonal voltages, generate a pulse width modulated ("PWM") signal based upon the orthogonal voltages, and control the motor using the PWM signal.

In some aspects, the electronic controller is further configured to: monitor a back electromotive force ("EMF") induced in a stator winding, compare a DC bus voltage of a battery pack to the back EMF, and apply a negative direct-axis current to the stator winding, wherein, in response to the motor exceeding a base speed, limit the back EMF to control the motor.

Methods of controlling a power tool described herein include determining, via an electronic processor, an optimized field weakening direct-axis current for a motor, determining, via the electronic processor, a maximum torque per ampere ("MTPA") direct-axis current for the motor, comparing, via the electronic processor, the optimized field weakening direct-axis current to the MTPA direct-axis current, controlling, via the electronic processor, the motor using the optimized field weakening direct-axis current in response to the optimized field weakening direct-axis current being less than the MTPA direct-axis current, and controlling, via the electronic processor, the motor using the MTPA direct-axis current in response to the MTPA direct-axis current being less than the optimized field weakening direct-axis current.

In some aspects, the method further includes determining, via the electronic processor, a rotational speed of the motor, comparing, via the electronic processor, a target modulation index to a measured modulation index to determine a modulation index error, scaling, via the electronic processor, the modulation index error based on the rotational speed of the motor to produce a scaled modulation index error, and determining, via the electronic processor, the optimized field weakening direct-axis current based on the scaled modulation index error.

In some aspects, the method further includes performing, via the electronic processor, a feedback control technique on a modulation index error to calculate the optimized field weakening direct-axis current, wherein the feedback control technique includes at least one of proportional-integral ("PI"), integral ("I"), proportional-integral-derivative ("PID"), and proportional-derivative ("PD") control.

In some aspects, the method further includes saturating, via the electronic processor, the optimized field weakening direct-axis current at a saturation block to prevent at least one of over-weakening and loss of torque control.

In some aspects, the method further includes limiting, via the electronic processor, the optimized field weakening direct-axis current to a threshold value, and outputting, via the electronic processor, the threshold value in response to a calculated optimized field weakening direct-axis current being less than the threshold value.

In some aspects, the method further includes calculating, via the electronic processor, the MTPA direct-axis current based on a permanent magnet flux linkage, a d-axis winding inductance, and a q-axis winding inductance.

In some aspects, the method further includes converting, via the electronic processor, voltage control signals into orthogonal voltages, and generating, via the electronic processor, pulse-width modulation ("PWM") control signals based on the orthogonal voltages at a frequency of at least 50 kHz.

Electronic controllers described herein include a processor and a memory. The electronic controller is configured to receive, via the processor, a modulation index feedback signal from a motor drive circuit connected to a motor, compare, via the processor, a modulation index target to the modulation index feedback signal, determine, via the processor, a modulation index error based upon the comparison, scale, via the processor, the modulation index error signal based on a rotational speed of the motor to generate a linearized error signal, calculate, via the processor, an optimized field weakening direct-axis control current by performing a feedback control technique on the linearized error signal, and saturate the optimized field weakening direct-axis control current to control the rotational speed of the motor.

In some aspects, the electronic controller is further configured to calculate, via the processor, a maximum torque per ampere ("MTPA") direct-axis current for the motor, compare, via the processor, the saturated optimized field weakening direct-axis control current to the MTPA direct-axis current, and control, via the processor, and the motor using the lesser of the saturated optimized field weakening direct-axis control current and the MTPA direct-axis current.

In some aspects, the electronic controller is further configured to sum and multiply, via the processor, the linearized error signal by a constant to calculate the optimized field weakening direct-axis control current.

In some aspects, the electronic controller is further configured to integrate and multiply, via the processor, the linearized error signal by a constant to calculate the optimized field weakening direct-axis control current.

In some aspects, the electronic controller is further configured to receive, via the processor, a speed setpoint from a variable-speed trigger, and generate, via the processor, a motor torque request based upon the speed setpoint, wherein the motor torque request is used in a field-oriented control torque calculation to determine the direct-axis control current.

In some aspects, the electronic controller further including a haptic engine electrically connected to the electronic controller, wherein the electronic controller is further configured to command, via the processor, the haptic engine to generate vibrations to signal a specific tool condition.

Before any embodiments are explained in detail, it is to be understood that the embodiments are not limited in application to the details of the configurations and arrangements of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

Unless the context of their usage unambiguously indicates otherwise, the articles "a," "an," and "the" should not be interpreted as meaning "one" or "only one." Rather these articles should be interpreted as meaning "at least one" or "one or more." Likewise, when the terms "the" or "said" are used to refer to a noun previously introduced by the indefinite article "a" or "an," "the" and "said" mean "at least one" or "one or more" unless the usage unambiguously indicates otherwise.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Relative terminology, such as, for example, "about," "approximately," "substantially," etc., used in connection with a quantity or condition would be understood by those of ordinary skill to be inclusive of the stated value and has the meaning dictated by the context (e.g., the term includes at least the degree of error associated with the measurement accuracy, tolerances [e.g., manufacturing, assembly, use, etc.] associated with the particular value, etc.). Such terminology should also be considered as disclosing the range defined by the absolute values of the two endpoints. For example, the expression "from about 2 to about 4" also discloses the range "from 2 to 4". The relative terminology may refer to plus or minus a percentage (e.g., 1%, 5%, 10%) of an indicated value.

It should be understood that although certain drawings illustrate hardware and software located within particular devices, these depictions are for illustrative purposes only. Functionality described herein as being performed by one component may be performed by multiple components in a distributed manner. Likewise, functionality performed by multiple components may be consolidated and performed by a single component. In some embodiments, the illustrated components may be combined or divided into separate software, firmware and/or hardware. For example, instead of being located within and performed by a single electronic processor, logic and processing may be distributed among multiple electronic processors. Regardless of how they are combined or divided, hardware and software components may be located on the same computing device or may be distributed among different computing devices connected by one or more networks or other suitable communication links. Similarly, a component described as performing particular functionality may also perform additional functionality not described herein. For example, a device or structure that is "configured" in a certain way is configured in at least that way but may also be configured in ways that are not explicitly listed.

Accordingly, in the claims, if an apparatus, method, or system is claimed, for example, as including a controller, control unit, electronic processor, computing device, logic element, module, memory module, communication channel or network, or other element configured in a certain manner, for example, to perform multiple functions, the claim or claim element should be interpreted as meaning one or more of such elements where any one of the one or more elements is configured as claimed, for example, to make any one or more of the recited multiple functions, such that the one or more elements, as a set, perform the multiple functions collectively.

Other examples, embodiments, features, and aspects will become apparent by consideration of the detailed description and accompanying drawings.

### BRIEF DESCRIPTION OF THE DRAWINGS

FIG. 1 is an isometric view of a power tool, according to some examples.
FIG. 2 is an isometric view of a battery pack, according to some examples.
FIG. 3 is a block diagram illustrating a control system for a power tool, according to some examples.
FIG. 4 is a circuit diagram illustrating a topology of a gate controller and a switching network, according to some examples.
FIG. 5 is a circuit diagram illustrating a current flow path through a switching network, according to some examples.
FIG. 6 is a circuit diagram illustrating a current flow path through a switching network, according to some examples.
FIG. 7 is a circuit diagram illustrating a current flow path through a switching network, according to some examples.
FIG. 8 is a circuit diagram illustrating a current flow path through a switching network, according to some examples.
FIG. 9 is a block diagram illustrating a topology for a controller to implement field-oriented control, according to some examples.
FIG. 10 is a block diagram illustrating a controller to implement field weakening, according to some examples.
FIG. 11 is a graph illustrating the control of a motor, according to some examples.
FIG. 12 is a graph illustrating the control of a motor, according to some examples.
FIG. 13 is a graph illustrating the control of a motor, according to some examples.
FIG. 14 is a graph illustrating the control of a motor, according to some examples.
FIG. 15 is a flowchart of a process for controlling a motor, according to some examples.

### DETAILED DESCRIPTION

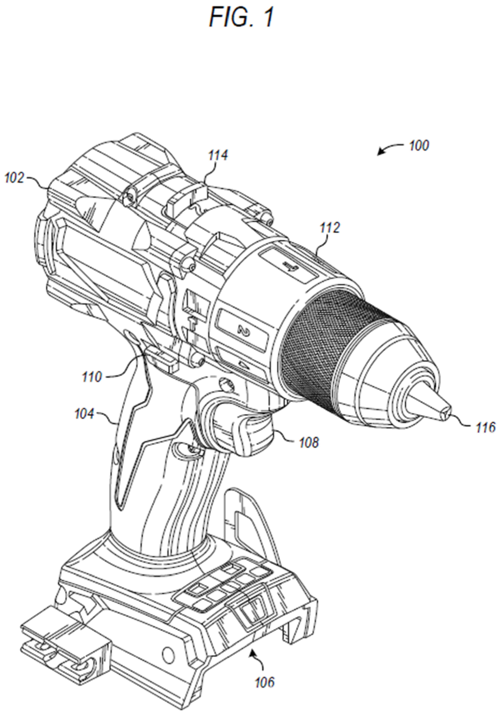

FIG. 1 is an isometric view of a power tool 100, according to some examples. In the example of FIG. 1, the power tool 100 is implemented as a drill/driver. While the power tool 100 is implemented as a drill/driver in the example of FIG. 1, in other examples, the power tool 100 may be implemented as any of a variety of other power tools. In various implementations, the power tool 100 is configured as a drill, a hole shooter, an impact driver, an impact wrench, a hammer drill, or other fastening or drilling tools. In some examples, the power tool 100 is implemented as a cutting or grinding tool, such as a circular saw, a jigsaw, a band saw, an angle grinder, or a straight grinder. In various implementations, the power tool 100 is implemented as a fastening tool, such as, for example, a screwdriver, a powered ratchet, a powered torque wrench, a nailer, a stapler, or a TC bolt gun. In some examples, the power tool 100 is a specialized tool, such as a rotary hammer, an angle drill, a lock bolt installation tool, a reaction arm tool, a riveting tool, or other application-specific power tools. The specific implementation of the power tool 100 may vary depending on the intended application and functional requirements.

In the example of FIG. 1, the power tool 100 includes a main body 102, a handle 104, and a battery pack interface 106. The power tool 100 also includes one or more user inputs, such as, for example, a trigger 108, a forward/reverse selector 110, a torque selector 112, and a range selector 114. In the example of FIG. 1, the trigger 108 is implemented as a sliding variable-position switch that adjusts motor speed based on user actuation. The forward/reverse selector 110 is implemented as a multi-position switch that allows the user to select the rotational direction of the motor. The torque selector 112 is implemented as a multi-position switch or a variable resistance potentiometer that allows the user to adjust torque output across predefined or continuously variable settings. The range selector 114 is implemented as a multi-position switch that allows the user to select different torque ranges for the torque selector 112. In other examples, the user inputs may be implemented using different configurations depending on the application.

The power tool 100 also includes an output element 116. In the example of FIG. 1, the output element 116 is implemented as a bit holder configured to secure a drill or driver bit. In other examples, the output element 116 may be implemented as a socket holder, a collet, a chuck, a blade mount, a grinding wheel interface, or other fastening mechanisms, depending on the type of power tool and its application.

The power tool 100 may include a motor and a controller (not shown in FIG. 1). In various implementations, the motor and the controller are positioned within the main body 102. The controller may receive input from one or more user inputs and adjust motor operation accordingly. For example, actuating the trigger 108 corresponds to selecting a motor speed, while engaging the forward/reverse selector 110 determines the rotational direction. The controller may regulate the motor speed based on the trigger position and maintain the selected direction based on the forward/reverse selector 110.

The user may adjust the torque setting using a combination of the torque selector 112 and the range selector 114. For example, the torque selector 112 allows the user to select a specific torque limit, while the range selector 114 modifies the overall torque range available for selection. For example, the range selector 114 may shift between low-torque and high-torque ranges, allowing the torque selector 112 to adjust within the selected range. The controller can interpret these selections and adjust motor operation accordingly to provide torque output that aligns with the selected settings.

The motor may be mechanically coupled to a drive mechanism (e.g., a transmission), which may then be coupled to the output element 116. The motor transfers mechanical power to the drive mechanism, which, in turn, transfers mechanical power to the output element 116. In various implementations where the power tool 100 is configured as a drill/driver, the drive mechanism may include a series of gears that transmit rotational motion from the motor to the output element 116 while adjusting speed and torque characteristics. For example, the motor may drive a pinion gear that engages with an intermediate gear train or a planetary gear system. These gears may modify the rotational speed and torque before transmitting the mechanical power to the spindle, which rotates the output element 116.

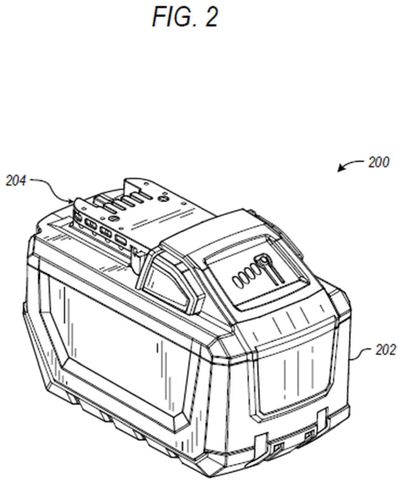

FIG. 2 is an isometric view of a battery pack 200, according to some examples. The battery pack 200 may be a power tool battery pack configured to supply power to a power tool, such as the power tool 100. In the example of FIG. 2, the battery pack 200 includes a housing 202 and an interface portion 204 for connecting the battery pack 200 to the power tool 100. The battery pack 200 may include one or more battery cells contained within the housing 202. For example, the battery pack 200 includes lithium-ion battery cells. In other implementations, the battery pack 200 may include cells with a different chemistry, such as nickel-cadmium, nickel-metal hydride, or other rechargeable battery technologies.

In the example of FIG. 2, the battery pack 200 is an 18-volt battery pack. In other implementations, the battery pack 200 may have a different nominal voltage. For example, the battery pack 200 may be configured as a 4-volt, 28-volt, 36-volt, 72-volt, 96-volt, or 120-volt battery pack, or another voltage level based on the power tool's design requirements. The battery pack 200 may also have different energy storage capacities, such as 3, 4, 5, 6, 8, or 12 ampere-hours, depending on the number and type of battery cells used.

The interface portion 204 may include elements for removably and securely connecting the battery pack 200 to the power tool 100 and/or facilitating electrical and data communication between the battery pack 200 and the power tool 100. In various implementations, the interface portion 204 may include mechanical features such as latches, rails, or locking tabs that engage with corresponding features at the battery pack interface 106 of the power tool 100. These mechanical features may help align the battery pack 200 with the battery pack interface 106 and provide a secure attachment during operation.

The interface portion 204 may also include electrical terminals that provide power to the power tool 100. In some examples, these terminals include a positive and a negative terminal that connect to corresponding terminals at the battery pack interface 106 to deliver electrical power from the battery pack 200 to the power tool 100. In various implementations, the interface portion 204 may also include data terminals for communication between the battery pack 200 and the power tool 100. For example, the battery pack 200 may include a microcontroller that monitors characteristics, such as voltage, current, temperature, or capacity. The data terminals may facilitate communication of this information to the power tool 100, allowing the tool's controller to adjust operation based on battery status.

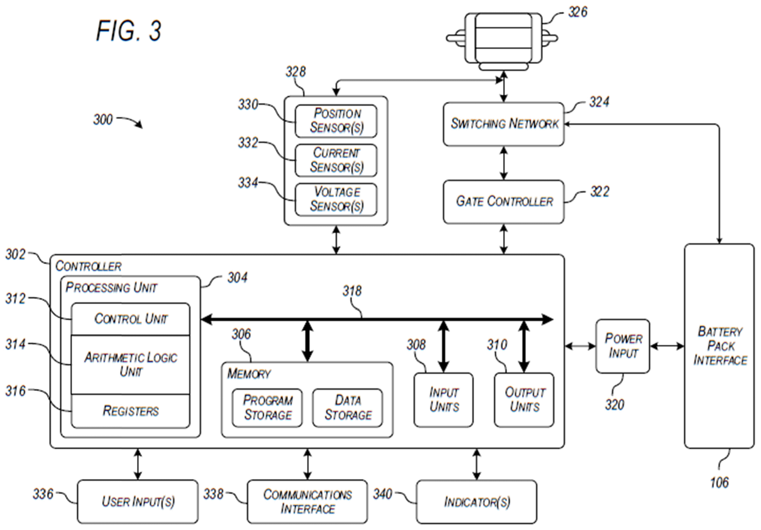

FIG. 3 is a block diagram illustrating a control system 300 for the power tool 100, according to some examples. In various implementations, portions of the control system 300 can be integrated into or connected to a printed circuit board (PCB) and can include an electronic controller 302. The electronic controller 302 may include hardware and/or software designed to manage the operation of various components of the power tool 100. The electronic controller 302 may include various electrical and/or electronic components that provide power, operational control, and/or protection to the components and/or modules within the electronic controller 302 and/or the power tool 100. For example, the electronic controller 302 includes a processing unit 304 (such as a microprocessor, a microcontroller, an electronic processor, an electronic controller, or other suitable programmable devices), a memory 306, input units 308, and/or output units 310. The processing unit 304 may include components such as a control unit 312, an arithmetic logic unit (ALU) 314, and/or a set of registers 316 (depicted in FIG. 3 as a group of registers). The processing unit 304 may use computer architectures such as a modified Harvard architecture, a von Neumann architecture, or other suitable architectures.

The processing unit 304, memory 306, input units 308, output units 310, and/or other modules connected to the electronic controller 302 may be interconnected via one or more control and/or data buses such as a common bus 318. While these buses are shown generally in FIG. 3 for illustrative purposes, the use of one or more control and/or data buses for the interconnection between and communication among the various modules and/or components would be known to a person skilled in the art in view of the embodiments described herein.

The memory 306 is a non-transitory computer-readable medium that includes, for example, a program storage area and/or a data storage area. The program storage area and data storage area can include any combination of different types of memory, such as read-only memory (ROM), random access memory (RAM), such as, for example, dynamic RAM (DRAM), synchronous DRAM (SDRAM), etc., electrically erasable programmable read-only memory (EEPROM), flash memory, one or more hard drives, one or more SD cards, and/or other suitable magnetic, optical, physical, and/or electronic memory devices. The processing unit 304 is connected to the memory 306 and is configured to execute software instructions that are capable of being stored in a RAM of the memory 306 (such as during execution), a ROM of the memory 306 (such as on a generally permanent basis), and/or another non-transitory computer-readable medium such as another memory or a disc.

The software stored in memory 306 may control various functions of the power tool 100. For example, the functional blocks, flowchart elements, and technical explanations described herein may serve as software specifications, which have been translated into the computer programs. This software may include firmware, applications, program data, filters, rules, program modules, and/or other executable instructions. The electronic controller 302 may retrieve and execute these instructions to control the operation of the power tool 100. In other configurations, the electronic controller 302 may include additional, fewer, and/or different components depending on the specific implementation.

The electronic controller 302 may be electrically and/or communicatively connected to and/or control operation of various modules and/or components of the power tool 100. In the example of FIG. 3, the power tool 100 includes a power input module 320, which regulates and manages the electrical power delivered from the battery pack interface 106 to the electronic controller 302 and other components of the power tool 100. For example, the power input module 320 receives direct current (DC) power from the battery pack 200 via the electrical terminals. The power input module 320 may include a combination of active and passive components, such as voltage regulators, current limiters, capacitors, and/or filtering circuits that adjust the voltage to appropriate levels required by the electronic controller 302 and/or other components. In various implementations, the power input module 320 filters noise from the DC power before providing the filtered power to the electronic controller 302 and/or other components.

In the example of FIG. 3, the power tool 100 includes a gate controller 322 and a switching network 324 for driving a motor 326 (such as the motor previously described with reference to FIG. 1). The motor 326 includes a rotor, a stator, and a shaft. The stator is the stationary part of the motor 326 and include coils of wire (which may be referred to as windings) through which current flows, creating a rotating magnetic field. The rotor may be positioned within or around the stator and is the moving part that rotates when acted upon by the magnetic field generated by the stator. The rotor may be connected to a shaft, which rotates about a longitudinal axis, transmitting the mechanical force generated by the motor 326 to the drive mechanism.

The motor 326 may be electrically connected to and receive power from the switching network 324. The switching network 324 may receive direct current (DC) from the battery pack 200 via the battery pack interface 106 and may convert the DC into phase signals. The phase signals may be applied to the stator windings in a controlled sequence, creating the magnetic fields that drive the rotor's rotation. For example, the gate controller 322 may be electrically connected to the switching network 324 and regulate the operation of switches (such as field-effect transistors [FETs]) within the switching network 324, determining when and how the DC power is converted into phase signals. The electronic controller 302 may be electrically connected to and generate and send control signals to the gate controller 322, instructing the gate controller 322 how to manage the operation of the switches of the switching network 324. Managing the timing and modulation of the switches of the switching network 324 allows for precise adjustments to frequency an amplitude of the power supplied to the motor 326, which allows for precise control of the speed, torque, and direction of the motor 326.

In various implementations, the power tool 100 implements advanced control techniques such as field-oriented control to precisely manage performance of the motor 326. Field-oriented control allows for independent control of torque and magnetic flux by mathematically transforming the phase current signals into a rotating reference frame aligned with the rotor's magnetic field. This provides superior dynamic response and efficiency compared to other control methods. As part of this control strategy, the power tool 100 can also implement field weakening to facilitate operation of the motor 326 beyond its base speed under various operating conditions. Field weakening is implemented to achieve higher output speeds at the motor 326 by reducing the strength of the magnetic field generated by the stator. This is accomplished by adjusting the phase signals applied to the stator windings, for example, by applying a negative d-axis current to reduce back-EMF and allow for higher speeds.

The electronic controller 302 may implement field-oriented control (FOC) to regulate the operation of the motor 326 by independently controlling the torque-producing and magnetizing components of the stator current. In various implementations, the electronic controller 302 may transform motor phase currents into a rotating reference frame, where the direct-axis (d-axis) component regulates the magnetizing flux linkage, and the quadrature-axis (q-axis) component determines the torque output of the motor 326. By dynamically adjusting these current components, the electronic controller 302 may optimize motor performance across different operating conditions.

For example, the electronic controller 302 may send control signals to the gate controller 322, which adjusts the phase signals output from the switching network 324 to implement field weakening by dynamically altering the current applied to the stator windings of the motor 326. During high-speed operation, the electronic controller 302 may command the gate controller 322 to reduce the d-axis current while increasing the rotor's rotational speed. This reduces the magnetic flux in the motor 326, which limits the back electromotive force (EMF) induced in the stator windings, allowing the motor 326 to operate at higher speeds without exceeding voltage limits of the battery pack 200 or the switching network 324. Additional details related to field-oriented control will be described herein.

In various implementations, the power tool 100 includes one or more sensors 328 that provide feedback to the electronic controller 302 for motor control and system monitoring. These sensors 328 may include position sensors 330, current sensors 332, and/or voltage sensors 334, which may provide data for implementing field-oriented control. The electronic controller 302 may receive sensor signals from these sensors to regulate operation of the motor 326, optimize efficiency, and protect system components.

For example, position sensors 330 may detect the rotor's angular position and speed, allowing the electronic controller 302 to synchronize the phase currents with the rotor's magnetic field. In various implementations, position sensors 330 include encoders, resolvers, or Hall-effect sensors that measure the rotor position directly. Alternatively, sensorless estimation techniques may be used, where the controller 302 infers rotor position based on back EMF or motor current feedback.

Current sensors 332 may measure the electrical current supplied to the stator windings of the motor 326. These measurements allow the electronic controller 302 to determine the d-axis and *q*-axis components of the motor current in a transformed reference frame. By regulating the d-axis and *q*-axis current components based on measured values, the electronic controller 302 may regulate torque and magnetic flux independently. In various implementations, current sensors 332 include shunt resistors, Hall-effect current sensors, or fluxgate sensors placed in the motor drive circuit to monitor phase currents.

Voltage sensors 334 may track the voltage supplied by the battery pack 200 and/or the voltage across the terminals of the motor 326. These measurements allow the electronic controller 302 to adjust control strategies, such as field weakening, when operating at high speeds. For example, by monitoring back EMF and DC bus voltage, the controller may ensure that voltage limits of the battery pack 200 and the switching network 324 are not exceeded. Voltage sensors 334 may include resistive voltage dividers, isolation amplifiers, or other voltage-sensing circuits.

The sensors 328 may include additional sensors for broader system monitoring and control. In some examples, the sensors 328 may include temperature sensors to monitor the motor 326 or switching network 324, torque sensors to measure the torque output at the motor shaft, acceleration sensors to detect rapid speed or direction changes, and vibration sensors to monitor excessive vibrations that could indicate mechanical wear or imbalance. Other examples of sensors 328 include proximity sensors, strain gauges, optical sensors, and gyroscopic sensors, depending on the application and design requirements of the power tool 100.

The electronic controller 302 may be electrically connected to one or more user inputs 336. The user inputs 336 may include the trigger 108, the forward/reverse selector 110, a torque selector 112, and/or the range selector 114, and/or any combination of digital and/or analog devices, including knobs, dials, switches, buttons, touchscreens, etc. In various implementations, the controller 302 detects user interactions with the user input 336 and changes an operating parameter of the motor 326 (such as starting the motor, stopping the motor, adjusting the speed of the motor, adjusting the torque output by the motor, adjusting the torque threshold of the electronic clutch, switching the direction of rotation of the motor, etc.).

In some examples, the power tool 100 includes a communications interface 338, such as a Bluetooth, Wi-Fi, and/or other wireless communication module. The communications interface 338 allows the electronic controller 302 to receive wireless signals from external devices (such as smartphones, tablets, or other control systems, etc.) and control various operational aspects of the power tool 100 accordingly.

In various implementations, the power tool 100 includes one or more indicators 340. The indicators 340 may include various types of display elements, such as light-emitting diodes (LEDs), display screens, or other types of visual or audible indicators. The indicators 340 may be electrically connected to the electronic controller 302, and the electronic controller 302 may control the indicators to output operational statuses of the power tool 100 to the user (such as, for example, indications of motor running, motor idle, battery pack state of charge, low battery warning, charging status, fault detection, motor overload, over-temperature warning, mode selection [e.g., forward/reverse], torque setting, and/or maintenance or service alerts, etc.).

In various implementations, the power tool 100 includes one or more indicators 340 that provide audio, visual, and/or haptic feedback to communicate operational statuses to the user. These indicators 340 may be electrically connected to the electronic controller 302, which may control them based on real-time tool conditions. Audio indicators may include speakers or buzzers that generate tones, beeps, or voice alerts. Visual indicators may include light-emitting diodes (LEDs) or display screens that present status information through illuminated signals, icons, or text. Haptic indicators may include haptic engines that generate vibrations to provide tactile feedback.

The indicators 340 may output operational statuses of the power tool 100. For example, speakers may emit beeps or spoken messages to indicate warnings, confirmations, or tool settings. LEDs may illuminate, flash, or change color to represent different states, while display screens may show numerical values, graphical icons, or system messages. Haptic engines may provide brief or sustained vibrations to signal specific tool conditions. The indicators 340 may communicate a variety of statuses, such as motor running, motor idle, battery pack state of charge, low battery warning, charging status, fault detection, motor overload, over-temperature warning, mode selection (e.g., forward/reverse), torque setting, and maintenance or service alerts. In various implementations, the indicators 340 provide feedback related to an electronic clutch. For example, when the torque limit is reached, the haptic engine may generate a vibration, the speaker may emit an alert tone, and the LED or display screen may signal that torque transmission has been interrupted.

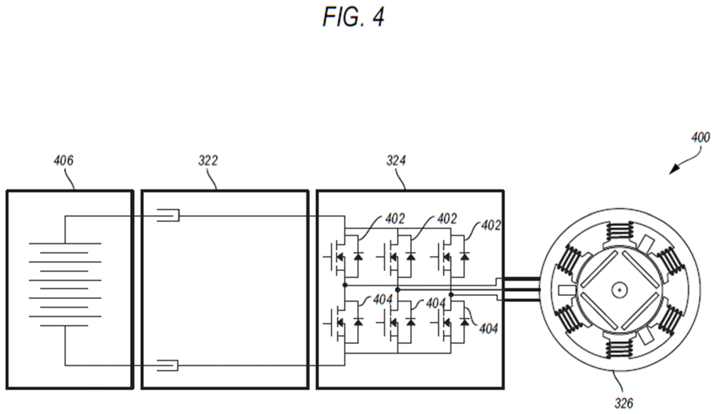

FIG. 4 is a circuit diagram 400 illustrating the topology of the gate controller 322 and the switching network 324, according to some examples. The switching network 324 includes one or more high-side switching elements 402 and one or more low-side switching elements 404. In various implementations, the high-side power switching elements 402 and the low-side power switching elements 404 are implemented using field-effect transistors (FETs) such as MOSFETs (metal-oxide-semiconductor FETs) or IGBTs (insulated-gate bipolar transistors).

The electronic controller 302 may command the gate controller 322 to provide control signals that selectively activate and deactivate the high-side and low-side switching elements 402 and 404. In response to detecting activation of the trigger 108, the electronic controller 302 may initiate a sequence in which power from the power source 406 (e.g., the battery pack 200) is applied to the stator windings of the motor 326 in a controlled manner.

For example, the electronic controller 302 may determine rotor position based on pulse signals from the sensors 328 and command the gate controller 322 to sequentially activate pairs of high-side and low-side switching elements 402 and 404. This switching sequence generates a rotating magnetic field in the stator, which interacts with the rotor to induce motion. As the rotor advances, the controller 302 continues updating switching signals based on sensor feedback, ensuring that commutation remains aligned with the rotor's position.

To regulate motor speed and torque, the electronic controller 302 may adjust the pulse width modulation (PWM) duty cycle of the switching signals. In various implementations, the duty cycle may be proportional to the trigger pull of the trigger 108, allowing for fine control over the power delivered to the motor 326.

Sensor feedback may also support field-oriented control (FOC), allowing the electronic controller 302 to regulate torque-producing and magnetizing current components. Current sensors 332 may measure stator phase currents, which the controller 302 may transform into a rotating reference frame to separate them into direct-axis current (*i_{d}*) and quadrature-axis current (*i_{q}*). The *i_{d}* component controls the magnetizing flux linkage, while the *i_{q}* component governs torque production. By regulating *i_{d}* and *i_{q}* components, the controller 302 may extend the speed range of the motor 326 under varying operating conditions.

For example, during high-speed operation, the electronic controller 302 may implement field weakening by reducing *i_{d}*, which decreases the overall magnetic flux linkage and helps limit back EMF. This change in flux lowers the back EMF, allowing the motor 326 to operate at higher speeds without exceeding voltage constraints imposed by the battery pack 200 and the switching network 324. Simultaneously, the controller 302 may adjust *i_{q}* to regulate torque output, ensuring stable performance while maintaining efficient power usage.

The number, type, and arrangement of the high-side switching elements 402 and low-side switching elements 404 may vary depending on the application and power requirements of the power tool 100. Alternative configurations may incorporate different switching topologies or additional protective components to enhance efficiency and reliability.

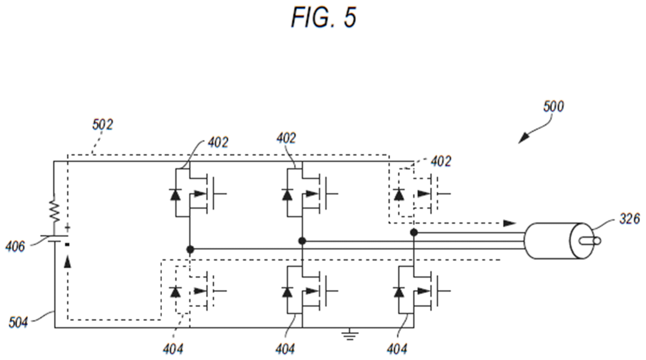

FIG. 5 is a circuit diagram 500 illustrating a current flow path through the switching network 324, according to some examples. The switching network 324 may include one or more high-side switching elements 402 and one or more low-side switching elements 404, as described above. For example, in response to detecting a pull of the trigger 108, the controller 302 may command the gate controller 322 to provide one or more control signals that selectively activate and deactivate the high-side switching elements 402 and the low-side switching elements 404 (e.g., sequentially, in pairs). This switching sequence may result in power being supplied from the power source 406.

In various implementations, current 502 may flow from the power source 406 through one of the high-side switching elements 402 to stator coils of the motor 326. The current 502 may then flow from the motor 326 to one of the low-side switching elements 404 before completing a conductive path to the power source 406. The specific current flow path and switching sequence may vary based on factors such as motor position, load conditions, and control strategy.

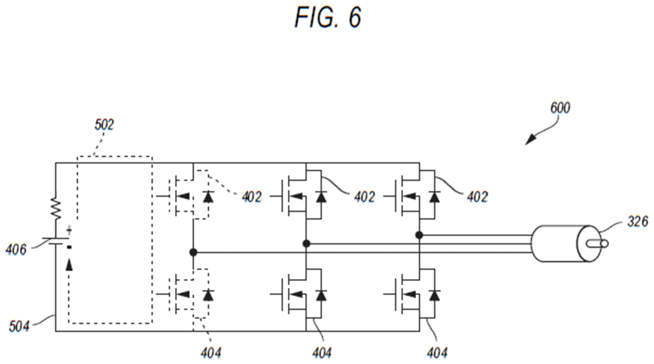

FIG. 6 is a circuit diagram 600 illustrating a current flow path through the switching network 324, according to some examples. The switching network 324 may include one or more high-side switching elements 402 and one or more low-side switching elements 404, as described above. For example, in response to detecting a pull of the trigger 108, the controller 302 may command the gate controller 322 to provide one or more control signals that selectively activate and deactivate the high-side switching elements 402 and the low-side switching elements 404 (e.g., sequentially, in pairs). This switching sequence may result in power being supplied from the power source 406.

In various implementations, current 502 may flow from the power source 406 through one of the high-side switching elements 402 to one of the low-side switching elements 404. The current 502 may then return to the power source 406, completing the circuit. Compared to other switching configurations, this current path may involve only two switching elements and may result in a conductive path that is shorter through the switching network 324.

In some examples, multiple high-side switching elements 402 and/or multiple low-side switching elements 404 may be activated at the same time. This control approach may reduce overall system resistance, allowing for higher current flow while distributing the electrical load across multiple switching elements. Distributing the load in this manner may help manage thermal dissipation and reduce the likelihood of excessive heating or wear in individual switching elements.

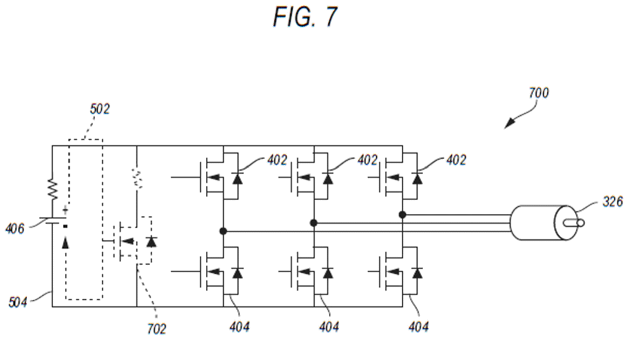

FIG. 7 is a circuit diagram 700 illustrating a current flow path through the switching network 324, according to some examples. In the example of FIG. 7, an additional switching element 702 is connected within the path of connection 504. Along with the additional switching element 702, an additional resistor is also connected to the path of connection 504.

For example, in response to detecting a pull of the trigger 108, the controller 302 may command the gate controller 322 to provide one or more control signals to selectively activate and deactivate the switching element 702, resulting in power being supplied from the power source 406. In this configuration, current 502 may flow from the power source 406 through the additional resistor and then through the additional switching element 702. In this example, the current 502 may travel only through the additional resistor and the additional switching element 702 before returning to the power source 406, thereby completing the circuit.

In various implementations, an inductor may be used in place of the additional resistor to achieve similar electrical characteristics. Additionally, other circuit configurations may incorporate alternative components, such as capacitors, depending on the specific application and design considerations.

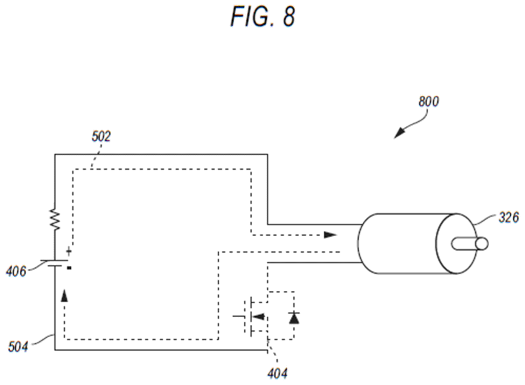

FIG. 8 is a circuit diagram 800 illustrating a current flow path through the switching network 324, according to some examples. In the example of FIG. 8, a single power switching element 404 is used. For example, in response to detecting a pull of the trigger 108, the controller 302 may command the gate controller 322 to provide one or more control signals to selectively activate and deactivate the power switching element 404, resulting in power being supplied from the power source 406.

In this configuration, current 502 may flow from the power source 406 to the motor 326 and then to the power switching element 404 before completing the circuit through the path of connection 504. The specific current flow and switching sequence may vary depending on motor characteristics, control strategies, and application requirements.

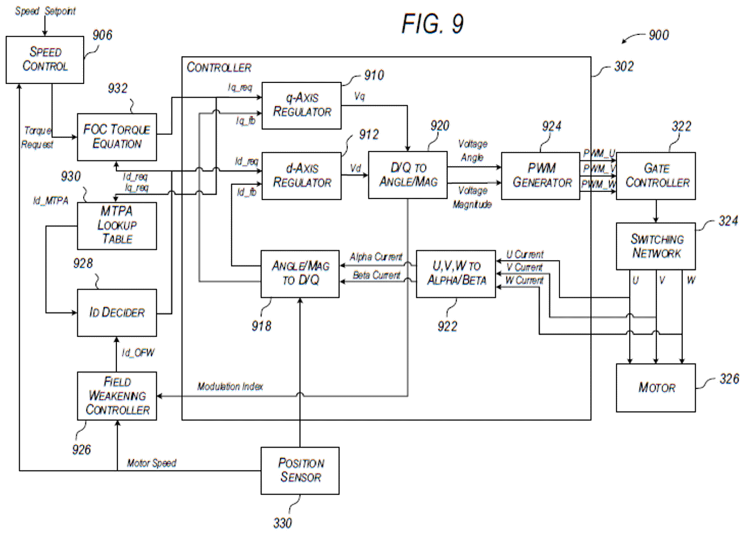

FIG. 9 is a block diagram 900 illustrating a topology for the controller 302 to implement field-oriented control, according to some examples. In the example of FIG. 9, to implement field-oriented control, the controller 302 receives position signals and current signals from the power tool 100 and generates corresponding pulse-width modulation (PWM) control signals for the gate controller 322. The position sensor 330 may detect the angular position of the rotor relative to the stator and output a position signal to a speed controller 906. In some examples, the position sensor 330 detects the angular position of the rotor using sensorless methods, such as back EMF methods such as sliding mode observer (SMO), zero-crossing detection, phase-lock looping, or the like. In other embodiments, the position sensor 330 detects the angular position of the rotor using position sensors (e.g., Hall effect sensors) that detect the position of the rotor.

Additionally or alternatively, the rotational speed of the motor 326 may also be estimated using signals from the current sensors 332 and/or the voltage sensors 334. For example, in implementations where sensorless estimation techniques are used, the electronic controller 302 may compute or infer rotor speed based on back EMF, which can be derived from voltage and current measurements. During operation, the controller 302 may monitor the voltage across the motor terminals using the voltage sensors 334 and the phase currents using the current sensors 332. By analyzing the relationship between terminal voltages, phase currents, and motor parameters (such as inductance and resistance), the controller 302 may estimate the back EMF generated by the motor 326. Since the amplitude and frequency of back EMF may be directly related to the rotational speed of the rotor, the controller 302 may use this information to estimate motor speed in real time or near-real time.

In various implementations, the controller 302 may incorporate control strategies such as modulation index control, maximum torque per ampere (MTPA) control, or field weakening control. The controller 302 may calculate d-axis and q-axis currents required to achieve the desired torque and speed. The d-axis represents the direct axis aligned with the rotor flux, while the *q*-axis represents the quadrature axis, which leads the d-axis by 90 electrical degrees and corresponds to the torque-producing component of the motor 326.

The speed controller 906 may determine the motor speed based upon the position signal sent from the position sensor 330. The speed controller 906 also receives a speed setpoint, which may be, for example, the speed command received from the trigger 108. The speed controller 906 then uses the motor speed and a speed setpoint to generate a motor torque request. The motor torque request is used in a field-oriented control torque calculation 932 made by the controller 302 when determining d-axis currents and q-axis currents.

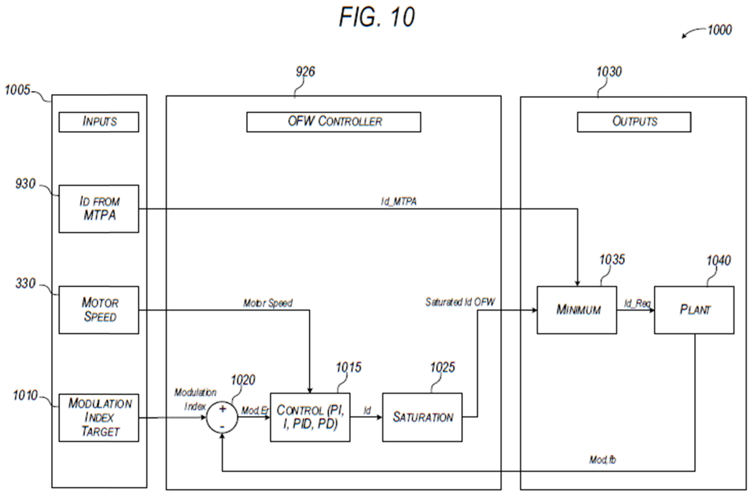

The position sensor 330 also outputs the position signal to a field weakening controller 926. The field weakening controller 926 uses the motor speed (or rotor position signal from the position sensor 330) and a modulation index value to adjust the d-axis current to reduce the motor's magnetic field strength. The modulation index is a value that corresponds to, for example, a load or torque of the motor 326. The modulation index represents a target value for the operation of the motor 326 (e.g., load, torque, etc.). The field weakening controller 926 will be described in greater detail below and is further illustrated in FIG. 10. Based upon the modulation index value and the motor speed, the field weakening controller 926 transmits an optimized field weakening (OFW) d-axis control current (*I_{d,OWF}*) to a d-axis control current decider block 928.

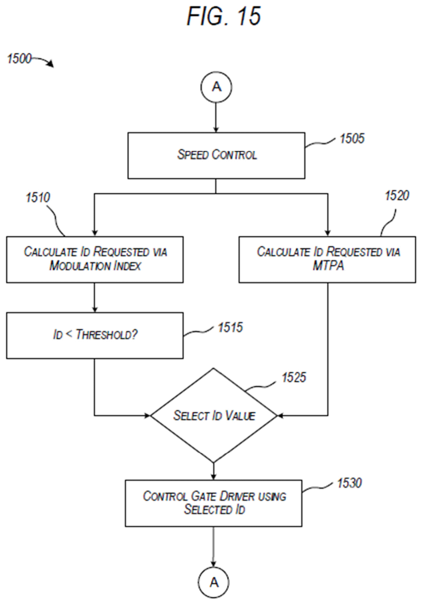

The d-axis control current decider block 928 is responsible for selecting the d-axis control current that is used by the controller 302. In some examples, the d-axis control current (*I_{d,req}*) is be provided to a d-axis regulator 912. The d-axis control current decider block 928 selects the appropriate d-axis control current (*I_{d,req}*) based upon the optimized field weakening d-axis control current (*I_{d,OWF}*) and an MTPA d-axis control current (*I_{d,MTPA}*). The MTPA d-axis current is calculated using EQN. 1 below: ${I}_{d} = \frac{- λ}{2 \left({L}_{d}-{L}_{q}\right)} - \sqrt{\frac{{λ}^{2}}{4 {\left({L}_{d}-{L}_{q}\right)}^{2}} + {I}_{q}^{2}}$ EQN. 1 where λ is a permanent magnet flux linkage, L_{d} is the d-axis winding inductance, and L_{q} is the q-axis winding inductance. The MTPA d-axis control current (*I_{d,MTPA}*) is transmitted to the d-axis control current decider block 928 from an MTPA look-up table 930. The process for selecting the appropriate d-axis control current (*I_{d,req}*) is described in greater detail with respect to FIG. 15.

As previously described, the controller 302 generates a q-axis control current (*I_{q,req}*) and a d-axis control current (*I_{d,req}*). These values may be determined by factors such as the desired speed, base speed of the motor, and control parameters, such as q-axis control current feedback (*I_{q,fb}*) and d-axis control current feedback (*I_{d,fb}*). The q-axis regulator 910 receives the q-axis control current (*I_{q,req}*) and the as *q*-axis control current feedback (*I_{q,fb}*) and, using these values, generates the q-axis voltage control signal (*V_{q}*). The d/q to angle/magnitude transform block 920 is then used to convert the *q*-axis voltage control signal (*V_{q}*) and the d-axis voltage control signal (*V_{d,ref}*) into simplified *α-β* orthogonal voltages, or voltage angle (*V_{α}*) and voltage magnitude (*V_{b}*). These voltages are then sent to a PWM generator 924, which may generate PWM control signals based on the input voltages (*V_{α}* and *V_{β}*). The PWM generator 924 outputs these PWM control signals to the gate controller 322.

With respect to the d-axis control current (*I_{d,req}*), the d-axis regulator 912 regulates the d-axis current based upon the d-axis control current (*I_{d,req}*) and the d-axis control current feedback (*I_{d,fb}*). Using these inputs, the d-axis regulator 912 generates a d-axis voltage control signal (*V_{d}*). This signal may also be sent to the d/q to angle/magnitude transform block 920.

In the example of FIG. 9, the controller 302 receives three instantaneous line currents (U, V, W) from the switching network 324, one for each phase of the motor 326. In various implementations, a different set of line currents may be received. For instance, two phases of the three-phase motor 326 may generate these line currents. A U, V, W to Alpha/Beta block 922 may convert the line currents into *α-β* coordinate system currents using a Clark transform. The *α-β* coordinate system provides a simplified two-phase representation of the three-phase motor 326. The U, V, W to Alpha/Beta block 922 may output the orthogonal currents to the Angle/Magnitude to d/q block 918.

The Angle/Magnitude to d/q block 918 also receives the motor speed from the position sensor 330. Using these inputs, the Angle/Magnitude to d/q block 918 may generate orthogonal d-axis and q-axis currents, which represent the transformed phase currents in the rotating reference frame. The Angle/Magnitude to d/q block 918 outputs the q-axis control current feedback (*I_{q,fb}*) to the q-axis regulator 910 and the d d-axis control current feedback (*I_{d,fb}*) to the d-axis regulator 912.

The gate controller 322 may convert the PWM control signals into discrete control signals, such as, for example six separate voltage switching signals (PWM gate signals), used to drive the switching elements in the switching network 324. In some examples, the PWM signals operate at a frequency of at least 50 kHz. In various implementations, the PWM frequency may be lower than 250 kHz, depending on the control requirements and switching characteristics of the system.

FIG. 10 is a block diagram 1000 illustrating the optimized field weakening (OFW) controller 926 as previously described, according to some examples. The OFW controller 926 receives inputs 1005 including the motor speed signal from the position sensor 330 and a modulation index target 1010. The OFW controller 926 uses the modulation index target 1010 and a modulation index feedback signal (*Mod_{fb}*), to determine a modulation index error at error correction block 1020. The error correction block 1020 then outputs a modulation index error signal (*Mod_{Er}*), and the OFW controller 926 uses the motor speed and the error modulation index error signal (*Mod_{Er}*) to generate an OFW d-axis current using the controller 1015. For example, the controller 1015 may perform proportional-integral (PI), integral (I), proportional-integral-derivative (PID), proportional-derivative (PD), or any combination of feedback control techniques to continuously calculate an OFW d-axis control current (*I_{d,OWF}*). As a result, the modulation index error signal (*Mod_{Er}*) is scaled based on the motor speed to, for example, linearize the system. In some embodiments, the linearized error is summed and multiplied by a constant to produce the OFW d-axis control current (*I_{d,OWF}*). In some embodiments, the linearized error is integrated and multiplied by a constant to produce the OFW d-axis control current (*I_{d,OWF}*). The OFW d-axis control current (*I_{d,OWF}*) is then saturated at saturation block 1025 by the controller. In some examples, the saturation of the OFW d-axis control current (*I_{d,OWF}*) may help prevent over-weakening or loss of torque control or may generally improve the efficiency of the motor 326 at torque operating points. Once saturated, the OFW controller 926 outputs (at 1030) the saturated OFW d-axis control current (*I_{d,OWF}*).

The block diagram 1000 also illustrates the selection of the d-axis control current (*I_{d,req}*), as described with respect to the d-axis control current decider block 928. The d-axis control current decider block 928 selects the lesser of two d-axis control current values, at block 1035. For example, if the saturated OFW d-axis control current (*I_{d,OWF}*) is greater than the MTPA d-axis control current (*I_{d,MTPA}*), the d-axis control current decider block 928 selects the MTPA d-axis control current (*I_{d,MTPA}*) to be used by the d-axis regulator 912. In contrast, if the saturated OFW d-axis control current (*I_{d,OWF}*) is less than the MTPA d-axis control current (*I_{d,MTPA}*), the d-axis control current decider block 928 selects the saturated OFW d-axis control current (*I_{d,OWF}*) to be used by the d-axis regulator 912. The OFW d-axis control current (*I_{d,OWF}*) and the MTPA d-axis control current (*I_{d,MTPA}*) are typically negative values. Therefore, selecting the lesser of the two d-axis control current values involves selecting the most negative d-axis control current value.

The d-axis control current decider block 928 is configured to select the lesser (i.e., more negative value) of the if the MTPA d-axis control current (*I_{d,MTPA}*) and the saturated OFW d-axis control current (*I_{d,OWF}*). The lesser of the control current values is the control current value that is used to control the motor 326. However, the OFW d-axis control current (*I_{d,OWF}*) also has a threshold or limit for the d-axis control current that can be used to control the motor. For example, the limit of the OFW d-axis control current (*I_{d,OWF}*) may be -60A. As a result, if the calculated OFW d-axis control current (*I_{d,OWF}*) is less thank the limit of the OFW d-axis control current (*I_{d,OWF}*), the decider block 928 will output the limit of the OFW d-axis control current (*I_{d,OWF}*). The decider block 928 will continue to output the limit of the OFW d-axis control current (*I_{d,OWF}*) as long as the calculated OFW d-axis control current (*I_{d,OWF}*) is less than the limit of the OFW d-axis control current (*I_{d,OWF}*). As torque continues to increase, eventually the MTPA d-axis control current (*I_{d,MTPA}*) will become less than the limit of the OFW d-axis control current (*I_{d,OFW}*), at which time the MTPA d-axis control current (*I_{d,MTPA}*) is used to control the motor 326. The process for selecting the d-axis control current (*I_{d,req}*) is described in greater detail with respect to FIG. 15. The d-axis control current (*I_{d,req}*) is then used to drive the motor 326 as previously described, and the modulation index feedback signal (*Mod_{fb}*) is transmitted back to the error correction block 1020, at block 1040, to be used in error correction by the controller 926.

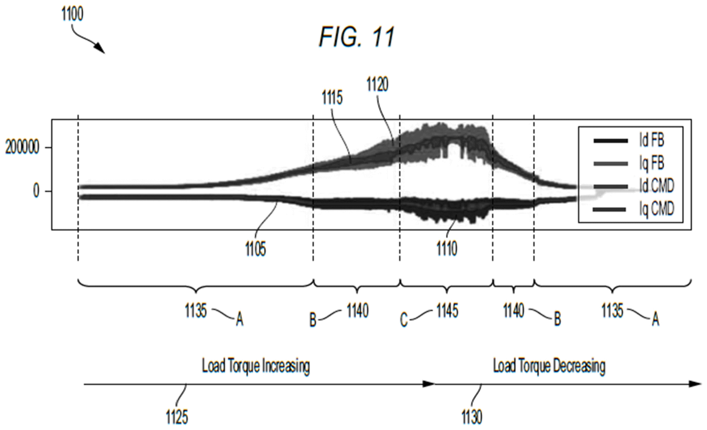

FIG. 11 is a graph 1100 illustrating the control of the motor 326 using optimized field weakening control current, according to some examples. The graph 1100 includes traces 1105, 1110, 1115, and 1120, shown both as a load torque of the motor 326 increases 1125 and decreases 1130. A first trace 1105 represents the d-axis control current (*I_{d,req}*) and a second trace 1110 represents d-axis control current feedback (*I_{d,fb}*). A third trace 1115 represents the q-axis control current (*I_{q,req}*), and a fourth trace 1120 represents q-axis control current feedback (*I_{q,fb}*). Each of the increasing and decreasing load torques are further illustrated within regions of torque operation, region A 1135, region B 1140, and region C 1145. As shown, during operation of the motor 326 and as load increases 1125 and decreases 1130, the d-axis control current decider block 928 selects different d-axis control current values. For example, region A 1135 illustrates that the d-axis control current decider block 928 has determined that the d-axis control current (*I_{d,req}*) that is to be used to control the motor 326 is the OFW d-axis control current (*I_{d,OWF}*). Region B 1140 illustrates that the d-axis control current decider block 928 has determined that the determined OFW d-axis control current (*I_{d,OWF}*) has reached the limit of the OFW d-axis control current (*I_{d,OWF}*) and outputs the limit of the OFW d-axis control current (*I_{d,OWF}*) to control the motor 326. Region C 1145 illustrates that the d-axis control current decider block 928 has selected the MTPA d-axis control current (*I_{d,MTPA}*) to control the motor 326 because the MTPA d-axis control current (*I_{d,MTPA}*) has become lesser (i.e., more negative) than the limit of the OFW d-axis control current (*I_{d,OWF}*).

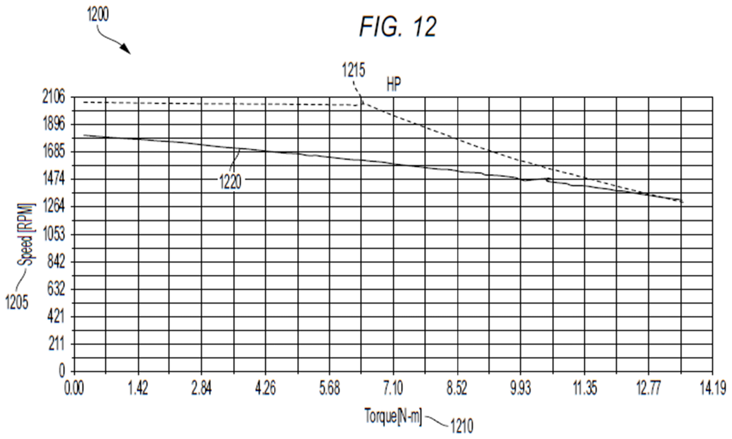

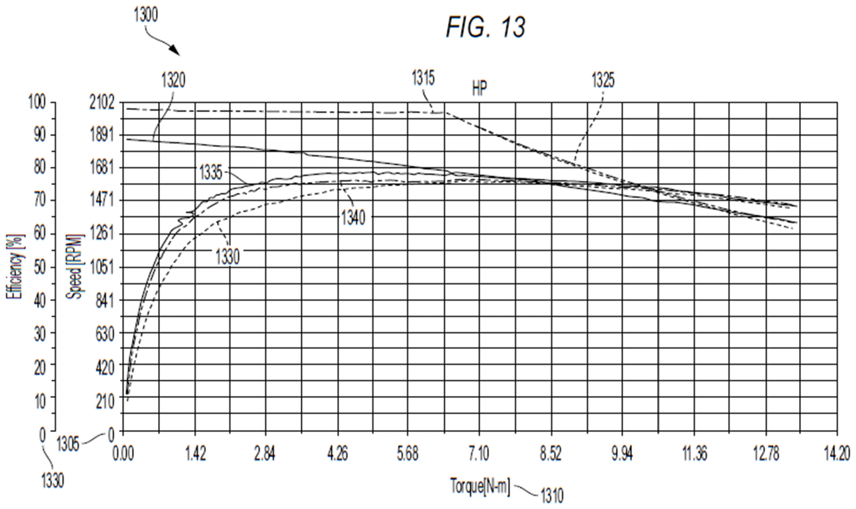

FIG. 12 is a graph 1200 illustrating the control of the motor 326 using a MTPA d-axis control current, according to some examples. The graph 1200 illustrates the speed of the motor 326 along a y-axis 1205 when compared with the torque of the motor 326 along an x-axis 1210. A first trace 1215 shows a static d-axis control current of, for example, -60A when compared with a second trace 1220, illustrating the MTPA d-axis control current. As shown, the MTPA d-axis control current causes the motor 326 to operate at a lower speed until motor torques because rather high. The static d-axis control current provides for increased performance of the motor 326 when compared to the MTPA d-axis control current which emphasizes efficiency over performance. However, as described below with respect to FIG. 13, the combined OFW d-axis control current (*I_{d,OWF}*) and MTPA d-axis control current can achieve both the same increased performance of the motor 326 as the static d-axis control current, but does so in a more efficient manner. This increase in efficiency is the result of the motor 326 only receiving the d-axis control current necessary to achieve the desired performance of the motor 326, which can be less than the static d-axis control current for a considerable portion of the torque range of the motor 326.

FIG. 13 is a graph 1300 illustrating the control of the motor 326 using both optimized field weakening (OFW) d-axis control current and MTPA d-axis control current, according to some examples. Similar to previously described graph 1200, the graph 1300 illustrates the speed of the motor 326 along a y-axis 1305 when compared with the torque of the motor 326 along an x-axis 1310. A first trace 1315 shows a static the d-axis control current of, for example, -60A when compared with a second trace 1320, illustrating the MTPA d-axis control current. Graph 1300 also illustrates a third trace 1325, illustrating the OFW d-axis control current and MTPA d-axis control current. As shown, the third trace 1325 closely follows the first trace 1315 as torque increases, then subsequently follows the second trace 1320 at the high end of motor torque operation. In other words, at lower motor torque operations, the combined use of OFW d-axis control current and MTPA d-axis control current functions similarly to the static d-axis control current with respect to speed control when the OFW d-axis control current is less than the MTPA d-axis control current (i.e., the OFW d-axis control current is more negative than the MTPA d-axis control current). At the high end of motor torque operation, the MTPA d-axis control current becomes less than the OFW d-axis control current. As a result, the d-axis control current that is used to control the motor 326 corresponds to the MTPA d-axis control current.

The graph 1300 also illustrates the efficiency of these control methods. A first efficiency trace 1330 shows a static d-axis control current motor efficiency when compared to motor torque (e.g., a -60A d-axis control current). A second efficiency trace 1335 shows an MTPA d-axis control current motor efficiency when compared to motor torque. A third efficiency trace 1340 shows the OFW d-axis control current and MTPA d-axis control current motor efficiency when compared to motor torque. As shown, the static the d-axis control current motor efficiency is lowest, which corresponds with the higher current demands of the motor when using a static d-axis control current value. In contrast, the MTPA d-axis control current motor efficiency represents the most efficient operation of the motor 326. However, the efficiency of the MTPA d-axis control current is offset by reduced performance as shown by the second trace 1320. The OFW d-axis control current also outperforms the MTPA d-axis control current and closely aligns with the performance of the static d-axis control current. However, as shown in FIG. 13, the OFW d-axis control current is significantly more efficient than using the static d-axis control current. This increased efficiency is the result of the OFW d-axis control current being determined as described above with respect to FIG. 10. Rather than using the static d-axis control current which can result in excess current being provided to the motor, the OFW d-axis control current only provides the current to the motor 326 that is required to achieve the desired control of the motor 326. This reduced OFW d-axis control current compared to the static d-axis control current results in essentially the same performance of the motor 326 but in a more efficient manner by using less current than the static d-axis control current.

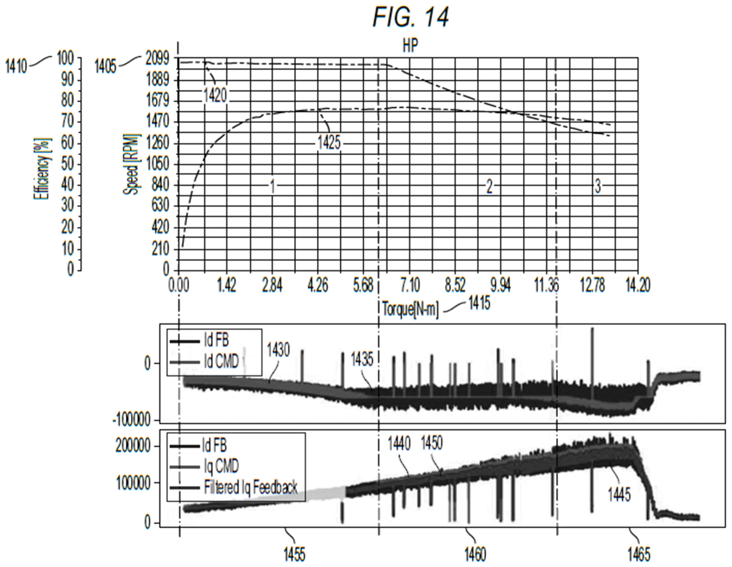

FIG. 14 is a graph 1400 illustrating the control of the motor 326 using both the OFW d-axis control current and MTPA control current, according to some examples. The graph 1400 combines some of the previously described features illustrated in FIG. 13 and FIG. 14 and a previously described. The graph 1400 includes speed y-axis 1405 and efficiency y-axis 1410 compared with motor torque x-axis 1415, along with a first trace 1420 illustrating the speed control of the combined use of OFW d-axis control current and MTPA d-axis control current and a second trace 1425 illustrating motor efficiency of the combined OFW d-axis control current and MTPA d-axis control current.

The graph 1400 further illustrates the d-axis and q-axis control currents and their respective feedback signals. The graph 1400 includes a d-axis control current (*I_{d,req}*) trace 1430 and a d-axis control current feedback (*I_{d,fb}*) trace 1435. The graph 1400 also includes a *q*-axis control current (*I_{q,req}*) trace 1440, a *q*-axis control current feedback (*I_{q,fb}*) trace 1445, and a filtered q-axis control current feedback (*I_{q,fb}*) trace 1450. As the motor begins operation, represented by a first region 1455 of the graph 1400, the OFW d-axis control current is used by the controller 302. As operation continues, the minimum or limit of the d-axis control current value for OFW d-axis control current (e.g., -60A) is reached, as represented by a second region 1460 of the graph 1400. Finally, the MTPA d-axis control current is used by the controller 302, as illustrated by a third region 1465. This combined approach of using both the OFW d-axis control current and the MTPA d-axis control current is able to maximize the efficiency and performance of the motor 326.

FIG. 15 is a flowchart illustrating a process 1500 for controlling the motor 326, according to some examples. Although the operations of process 1500 are illustrated with reference to specific examples, this process may be applied in different contexts to perform various motor control operations. The sequence of operations shown in FIG. 15 is presented in a particular order, but the operations may be reordered, executed in parallel, or repeated as appropriate for a given implementation. In various implementations, these control reference signals are associated with field-oriented control.

In some examples, process 1500 may be executed by the controller 302 using the controller topology of FIG. 9 to implement field-oriented control, as described with respect to FIG. 9. However, other implementations may use different configurations. In the example process 1500, the controller 302 receives a speed control command (at block 1505). The speed command may be generated based on user input, such as from the variable-speed trigger 108 or another speed selection mechanism. In some examples, the controller 302 may determine the speed command based on operational parameters and power tool conditions. If the speed command is received from the trigger 108, the controller 302 may convert the degree of trigger actuation into a corresponding speed command.

In the example process 1500, the controller 302 calculates the OFW d-axis control current (*I_{d,OFW}*) (at block 1510). These calculations may be performed by comparing a target modulation index value to a measured modulation index feedback in order to determine a modulation index error, such as the error determination performed by error correction block 1020. Once the modulation index error is determined, the controller 302 may scale the modulation index error based on the rotational speed of the motor 326 to produce a scaled modulation index error. The controller 302 may then determine the OFW d-axis control current (*I_{d,OWF}*) based on the scaled modulation index error, as described with respect to OFW controller 926 in FIG. 10. At block 1515 of the process 1500, the controller compares the OFW d-axis control current (*I_{d,OWF}*) to a minimum or limit OFW d-axis current. If the OFW d-axis current is not less than the limit OFW d-axis current, the calculated value for the OFW d-axis control current (*I_{d,OFW}*) is outputted at block 1515. If the OFW d-axis current is less than the limit OFW d-axis current, the limit OFW d-axis control current is outputted at block 1515.

The process 1500 also includes calculating the MTPA d-axis control current (*I_{d,MTPA}*), at block 1520. The calculation of the MTPA d-axis control current (*I_{d,MTPA}*) by the controller 302, at block 1520 may be performed before, after, or at the same time as the calculates the d-axis control current (*I_{d,req}*) at block 1510. Once both the MTPA d-axis control current (*I_{d,MTPA}*) and the OFW d-axis control current (*I_{d,OWF}*) are determined, the controller compares the values to each other at block 1525. If the OFW d-axis control current (*I_{d,OWF}*) is less than the MTPA d-axis control current (*I_{d,MTPA}*), the controller 302 controls the gate controller 322 to drive the motor 326 based on the OFW d-axis control current (*I_{d,OWF}*). On the other hand, if the OFW d-axis control current (*I_{d,OWF}*) is not less than the MTPA d-axis control current (*I_{d,MTPA}*), the controller 302 controls the gate controller 322 to drive the motor 326 based on the MTPA d-axis control current (*I_{d,MTPA}*). In other words, the controller 302 selects the lesser of the two values in order to control the gate controller 322 to drive the motor 326 (block 1530).

In the example process 1500, the controller 302 may command the gate controller 322 to control the switching elements of the switching network 324 according to the PWM control signals (at block 1530) according to the previously-described control techniques. The switching elements may alternate between conducting and non-conducting states to regulate current flow between the power source and the motor 326. A PWM output from the controller 302 (or from the PWM generator 924) may be connected to an input of the gate controller 322. The gate controller 322 may receive the PWM control signals and translate them into gate drive signals for individual switching elements or switching element pairs, depending on the system configuration. These gate drive signals may then be applied to the switching elements.

### REPRESENTATIVE FEATURES

Representative features are set out in the following clauses, which stand alone or may be combined, in any combination, with one or more features disclosed in the text and/or drawings of the specification.

Clause 1. A power tool comprising: a motor; a switching network configured to drive the motor, the switching network including a plurality of switches; a gate driver configured to provide drive signals to the plurality of switches in the switching network to drive the motor; and an electronic controller configured to: determine an optimized field weakening direct-axis current for the motor, determine a maximum torque per ampere ("MTPA") direct-axis current for the motor, compare the optimized field weakening direct-axis current to the MTPA direct-axis current, control, in response to the optimized field weakening direct-axis current being less than the MTPA direct-axis current, the motor using the optimized field weakening direct-axis current, and control, in response to the MTPA direct-axis current being less than the optimized field weakening direct-axis current, the motor using the MTPA direct-axis current.

Clause 2. The power tool of clause 1, wherein, to determine the optimized field weakening direct-axis current, the electronic controller is configured to: determine a rotational speed of the motor; compare a target modulation index to a measured modulation index to determine a modulation index error; scale the modulation index error based on the rotational speed of the motor to produce a scaled modulation index error; and determine the optimized field weakening direct-axis current based on the scaled modulation index error.

Clause 3. The power tool of clause 1, wherein the electronic controller is further configured to limit the optimized field weakening direct-axis current to a threshold value.

Clause 4. The power tool of clause 1, wherein the electronic controller is further configured to select a most negative direct-axis current value when comparing the optimized field weakening direct-axis current to the MTPA direct-axis current.

Clause 5. The power tool of clause 1, further comprising: a current sensor configured to measure electrical current supplied to a stator winding of the motor, wherein the electronic controller is further configured to transform the measured electrical current into d-axis and q-axis components in a rotating reference frame.

Clause 6. The power tool of clause 1, wherein the electronic controller is further configured to: convert the optimized field weakening direct-axis current into orthogonal voltages; generate a pulse width modulated ("PWM") signal based upon the orthogonal voltages; and control the motor using the PWM signal.

Clause 7. The power tool of clause 1, wherein the electronic controller is further configured to: monitor a back electromotive force ("EMF") induced in a stator winding; compare a DC bus voltage of a battery pack to the back EMF; and apply a negative direct-axis current to the stator winding; wherein, in response to the motor exceeding a base speed, limit the back EMF to control the motor.

Clause 8. A method of controlling a power tool, the method comprising: determining, via an electronic processor, an optimized field weakening direct-axis current for a motor; determining, via the electronic processor, a maximum torque per ampere ("MTPA") direct-axis current for the motor; comparing, via the electronic processor, the optimized field weakening direct-axis current to the MTPA direct-axis current; controlling, via the electronic processor, the motor using the optimized field weakening direct-axis current in response to the optimized field weakening direct-axis current being less than the MTPA direct-axis current; and controlling, via the electronic processor, the motor using the MTPA direct-axis current in response to the MTPA direct-axis current being less than the optimized field weakening direct-axis current.

Clause 9. The method of clause 8, further comprising: determining, via the electronic processor, a rotational speed of the motor; comparing, via the electronic processor, a target modulation index to a measured modulation index to determine a modulation index error; scaling, via the electronic processor, the modulation index error based on the rotational speed of the motor to produce a scaled modulation index error; and determining, via the electronic processor, the optimized field weakening direct-axis current based on the scaled modulation index error.

Clause 10. The method of clause 8, further comprising: performing, via the electronic processor, a feedback control technique on a modulation index error to calculate the optimized field weakening direct-axis current; wherein the feedback control technique includes at least one of proportional-integral ("PI"), integral ("I"), proportional-integral-derivative ("PID"), and proportional-derivative ("PD") control.

Clause 11. The method of clause 8, further comprising: saturating, via the electronic processor, the optimized field weakening direct-axis current at a saturation block to prevent at least one of over-weakening and loss of torque control.

Clause 12. The method of clause 8, further comprising: limiting, via the electronic processor, the optimized field weakening direct-axis current to a threshold value; and outputting, via the electronic processor, the threshold value in response to a calculated optimized field weakening direct-axis current being less than the threshold value.

Clause 13. The method of clause 8, further comprising: calculating, via the electronic processor, the MTPA direct-axis current based on a permanent magnet flux linkage, a d-axis winding inductance, and a q-axis winding inductance.

Clause 14. The method of clause 8, further comprising: converting, via the electronic processor, voltage control signals into orthogonal voltages; and generating, via the electronic processor, pulse-width modulation ("PWM") control signals based on the orthogonal voltages at a frequency of at least 50 kHz.

Clause 15. An electronic controller including a processor and a memory, the electronic controller configured to: receive, via the processor, a modulation index feedback signal from a motor drive circuit connected to a motor; compare, via the processor, a modulation index target to the modulation index feedback signal; determine, via the processor, a modulation index error based upon the comparison, scale, via the processor, the modulation index error signal based on a rotational speed of the motor to generate a linearized error signal; calculate, via the processor, an optimized field weakening direct-axis control current by performing a feedback control technique on the linearized error signal; and saturate the optimized field weakening direct-axis control current to control the rotational speed of the motor.

Clause 16. The electronic controller of clause 15, further configured to: calculate, via the processor, a maximum torque per ampere ("MTPA") direct-axis current for the motor; compare, via the processor, the saturated optimized field weakening direct-axis control current to the MTPA direct-axis current; and control, via the processor, and the motor using the lesser of the saturated optimized field weakening direct-axis control current and the MTPA direct-axis current.

Clause 17. The electronic controller of clause 15, further configured to: sum and multiply, via the processor, the linearized error signal by a constant to calculate the optimized field weakening direct-axis control current.

Clause 18. The electronic controller of clause 15, further configured to: integrate and multiply, via the processor, the linearized error signal by a constant to calculate the optimized field weakening direct-axis control current.

Clause 19. The electronic controller of clause 15, further configured to: receive, via the processor, a speed setpoint from a variable-speed trigger; and generate, via the processor, a motor torque request based upon the speed setpoint; wherein the motor torque request is used in a field-oriented control torque calculation to determine the direct-axis control current.

Clause 20. The electronic controller of clause 15, further comprising: a haptic engine electrically connected to the electronic controller; wherein the electronic controller is further configured to command, via the processor, the haptic engine to generate vibrations to signal a specific tool condition.

Thus, embodiments described herein provide, among other things, a power tool implementing optimized field weakening using field-oriented control. Various features and advantages are set forth in the following claims.

## Claims

1. A power tool comprising:
a motor;
a switching network configured to drive the motor, the switching network including a plurality of switches;
a gate driver configured to provide drive signals to the plurality of switches in the switching network to drive the motor; and
an electronic controller configured to:
determine an optimized field weakening direct-axis current for the motor,
determine a maximum torque per ampere ("MTPA") direct-axis current for the motor,
compare the optimized field weakening direct-axis current to the MTPA direct-axis current,
control, in response to the optimized field weakening direct-axis current being less than the MTPA direct-axis current, the motor using the optimized field weakening direct-axis current, and
control, in response to the MTPA direct-axis current being less than the optimized field weakening direct-axis current, the motor using the MTPA direct-axis current.

2. The power tool of claim 1, wherein, to determine the optimized field weakening direct-axis current, the electronic controller is configured to:
determine a rotational speed of the motor;
compare a target modulation index to a measured modulation index to determine a modulation index error;
scale the modulation index error based on the rotational speed of the motor to produce a scaled modulation index error; and
determine the optimized field weakening direct-axis current based on the scaled modulation index error.

3. The power tool of claim 1, wherein the electronic controller is further configured to limit the optimized field weakening direct-axis current to a threshold value.

4. The power tool of claim 1, wherein the electronic controller is further configured to select a most negative direct-axis current value when comparing the optimized field weakening direct-axis current to the MTPA direct-axis current.

5. The power tool of claim 1, further comprising:
a current sensor configured to measure electrical current supplied to a stator winding of the motor,
wherein the electronic controller is further configured to transform the measured electrical current into d-axis and q-axis components in a rotating reference frame.

6. The power tool of claim 1, wherein the electronic controller is further configured to:
convert the optimized field weakening direct-axis current into orthogonal voltages;
generate a pulse width modulated ("PWM") signal based upon the orthogonal voltages; and
control the motor using the PWM signal.

7. The power tool of claim 1, wherein the electronic controller is further configured to:
monitor a back electromotive force ("EMF") induced in a stator winding;
compare a DC bus voltage of a battery pack to the back EMF; and
apply a negative direct-axis current to the stator winding;
wherein, in response to the motor exceeding a base speed, limit the back EMF to control the motor.

8. A method of controlling a power tool, the method comprising:
determining, via an electronic processor, an optimized field weakening direct-axis current for a motor;
determining, via the electronic processor, a maximum torque per ampere ("MTPA") direct-axis current for the motor;
comparing, via the electronic processor, the optimized field weakening direct-axis current to the MTPA direct-axis current;
controlling, via the electronic processor, the motor using the optimized field weakening direct-axis current in response to the optimized field weakening direct-axis current being less than the MTPA direct-axis current; and
controlling, via the electronic processor, the motor using the MTPA direct-axis current in response to the MTPA direct-axis current being less than the optimized field weakening direct-axis current.

9. The method of claim 8, further comprising:
determining, via the electronic processor, a rotational speed of the motor;
comparing, via the electronic processor, a target modulation index to a measured modulation index to determine a modulation index error;
scaling, via the electronic processor, the modulation index error based on the rotational speed of the motor to produce a scaled modulation index error; and
determining, via the electronic processor, the optimized field weakening direct-axis current based on the scaled modulation index error.

10. The method of claim 8, further comprising:
performing, via the electronic processor, a feedback control technique on a modulation index error to calculate the optimized field weakening direct-axis current;
wherein the feedback control technique includes at least one of proportional-integral ("PI"), integral ("I"), proportional-integral-derivative ("PID"), and proportional-derivative ("PD") control.

11. The method of claim 8, further comprising:
saturating, via the electronic processor, the optimized field weakening direct-axis current at a saturation block to prevent at least one of over-weakening and loss of torque control.

12. The method of claim 8, further comprising:
limiting, via the electronic processor, the optimized field weakening direct-axis current to a threshold value; and
outputting, via the electronic processor, the threshold value in response to a calculated optimized field weakening direct-axis current being less than the threshold value.

13. The method of claim 8, further comprising:
calculating, via the electronic processor, the MTPA direct-axis current based on a permanent magnet flux linkage, a d-axis winding inductance, and a q-axis winding inductance.

14. The method of claim 8, further comprising:
converting, via the electronic processor, voltage control signals into orthogonal voltages; and
generating, via the electronic processor, pulse-width modulation ("PWM") control signals based on the orthogonal voltages at a frequency of at least 50 kHz.
